# EUROPEAN PATENT SPECIFICATION

(11) **EP 0 174 099 B1**
(45) Date of publication and mention of the grant of the patent: **14.07.1993**
(21) Application number: 85305545.7
(22) Date of filing: 05.08.1985
(51) Int. Cl.: G06F 3/153

(54) **Fiber optic terminal interface**
Terminalschnittstelle mit Fiberoptik
Interface à fibres optiques pour un terminal

(30) Priority: 06.08.1984 US 637937; 06.08.1984 US 637938
(43) Date of publication of application: 12.03.1986
(73) Proprietor: TEXAS INSTRUMENTS INCORPORATED, Dallas Texas 75265 (US)
(72) Inventor: Diefendorff, Keith E., Austin, TX 78731 (US); Grohman, Robert O., Austin, TX 78759 (US)
(74) Representative: Abbott, David John

(56) References cited:
- EP-A- 0 039 102
- EP-A- 0 076 362
- GB-A- 1 369 463
- US-A- 3 896 428

## Description

### BACKGROUND OF THE INVENTION

The present invention relates to the manner of connecting a user input/output terminal to a data processing system. Such a connection is required in the case in which a single data processing system supports a number of user terminals, or in the case in which a data processing system supports only a single user terminal which is located remotely from the data processing system. A communications link between the data processing system and the user terminal is required in order to provide the required interaction between these elements. The present invention relates to this communications link.

The user terminals of the type to which the present invention is applicable include a variety of input and output devices. The major output device used in such user terminals is a video display. A video display is typically a raster scanned cathode ray tube which provides graphic and pictorial information to the user. The terminal may also include a tone generator for generating tones which may serve as audible alarms or the like. Such a user terminal may further include some type of synthetic speech synthesis device which provides a machine generated output in a human language which may be understood by a naive user. In addition, should there be a limit on types of ancillary data, such a device may include one or more indicator lights which are controlled by the data processing syste .

User terminals of the type to which the present invention is applicable typically employ a manually actuated typewriter style keyboard as the major input device. This keyboard is employed by manually depressing one or more keys to compose textural messages for transmission to the data processing syste . Another type of widely used input device is a mouse. A mouse is a pointing device employed with a video display screen. A cursor or indicating device on the screen is moved in correspondence to the movement of the mouse on a surface such as a desk adjacent to the user terminal. A mouse of this type may also include one or more user actuatable switches which serve to transmit condition signals from the user to the data processing apparatus. In addition, it is possible for such a user terminal to include a microphone for receiving spoken messages which may be interpreted in conjunction with a speech recognition system.

It can be seen that even the simplest type of user terminal requires bidirectional communication. In the event that the data processing system transmits video data to the user terminal, this communication must be at a high bit rate. This is in contrast to data such as from a keyboard which is passing from the user terminal to the data processing system, which is ordinarily of a low bit rate. Thus, an interface of the type to which the present invention pertains includes bidirectional communication of varying bit rates.

There are mechanical and electrical requirements for the communications link of this type. Firstly, the weight and bulk of the communications link between these two systems needs to be minimized. A minimal weight and bulk will permit easier installation of this communications link. In addition, it is also desirable that the cable employed for this purpose be flexible in order to be able to better conform to the routing requirements of any specific installation. Typically, such communications links would be installed in office locations such as used by an engineer or other technical worker. Other electronic devices are commonly employed in such an environment.

This brings to mind the electrical requirements for such a communications link. Electromagnetic interference (EMI) and radio frequency interference (RFI) are types of radiated energy which might eminate from such a communications link. Particularly in the case in which a high bit rate is required, therefore requiring high frequency signals on the communications link, it is necessary to make special provisions to minimize the amount of energy radiated. Minimization of this radiated energy serves to minimize the interference of this particular communications link with other electrical systems employed in this same area.

On a similar line, it is desirable to provide a type of communications link which minimizes electrostatic discharge (ESD). The data processing system and the user terminal would typically be constructed using metal oxide semiconductor (MOS) devices. These MOS devices are highly suceptible to static electricity and are vulnerable to electrostatic discharge. Therefore, it would be highly desirable to provide such a communications link which minimized or eliminated electrostatic discharge.

A further problem with such communications links is ground shift. Electrically shielded high frequency copper wires typically use wire shields tied to chassis ground. When two chassis are located remotely, it is possible that they are tied to differing branches of the electric power lines and thus have differing chassis ground potentials. This causes unwanted current through the wire shield which can cause numerous problems.

In EP-A-0 039 102, there is disclosed a data processing system having a main station and a peripheral station connected by a communications link. This link carries both an analogue video signal for display at the peripheral station and a data signal multiplexed together. The data signal is transmitted during the frame blanking intervals of the video signal.

According to the present invention there is provided a video communications interface comprising
a communications link for transmitting communications signals,
a video generator for generating a video signal having a plurality of scan lines,
a data encoder for generating a digital data signal,
a multiplexing means connected to said video generator and said data encoder for time division multiplexing said video signal and said digital data
signal to form a multiplexed signal, and
a transmitting means connected to said communications link and said multiplexing means for generating communications signals on said communications link corresponding to said multiplexed signal, and
a video display device including
a receiving means connected to said communications link for receiving the communications signals and for producing therefrom a corresponding received multiplexed signal,
a demultiplexing means connected to the receiving means for deriving and providing both a received video signal and a received digital data signal from the received multiplexed signal,
a video display means for generating a visually perceivable display corresponding to the received video signal, and
a utilization device for receiving and using said received digital data signal,
the video communications interface being characterised in that
the video signal is a digital video signal,
the digital data signal is generated during the retrace intervals between the video scan lines of the video signal,
which generated digital signal has self-clocking control data and has a lower data rate than said digital video signal; and
the demultiplexing means also includes a self-clocking detection means for detecting said self-clocking of the digital data signal present within the received multiplexed signal, thereby enabling detection of said data, and
a timed gating means connected to said self-clocking detecting means for enabling said self-clocking detection means to provide output signals only during time intervals during which the retrace interval is expected.

### BRIEF DESCRIPTION OF THE DRAWINGS

These and other advantages and features of the invention will be further described below in the detailed description of the invention taken in conjunction with the drawings in which:
Figure 1 illustrates the general outline of the data processing system and user terminal combination to which the present invention is applicable;
Figure 2 illustrates the details of the transmitters and receivers and the dual channel communications system according to the preferred embodiment of the present invention;
Figure 3 illustrates the form of the data transmitted from the data processing system to the user terminal in accordance with the preferred embodiment of the present invention;
Figure 4 illustrates the preferred embodiment of the transmitter located within the data processing system of the present invention;
Figure 5 illustrates the preferred embodiment of the receiver within the user terminal;
Figure 6 illustrates the preferred embodiment of the transmitter within the user terminal; and
Figure 7 illustrates the preferred embodiment of the receiver within the data processing system.

### DETAILED DESCRIPTION OF THE PREFERRED EMBODIMENT

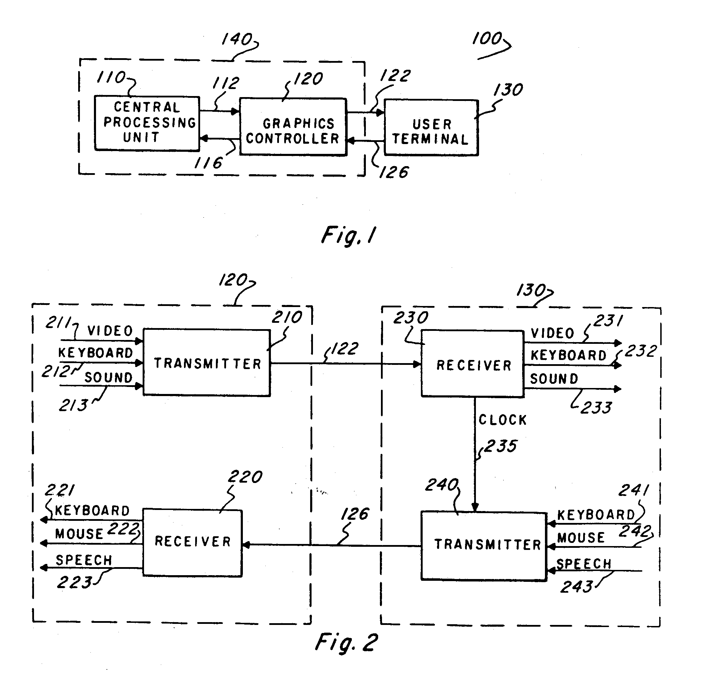

The features and particulars of the preferred embodiment of the present invention will now be described in detail. Figure 1 illustrates the general construction of an apparatus such as employed in the preferred embodiment of the present invention. This apparatus includes a central processing unit 110, a graphics controller 120 and a user terminal 130. The central processing unit 110 is in bidirectional communication with graphics controller 120 via communication links 112 and 116. Similarly, graphics controller 120 is in bidirectional communication with user terminal 120 via communication links 122 and 126. A dashed line 140 encloses both central processing unit 110 and graphics controller 120. This dashed line 140 indicates the parts which are included within a single enclosure. In the event that computing system 100 serves a single user, it would be desirable to place all of these units within a single enclosure. This would provide the communication links 112 and 116 and the communication links 122 and 126 were within this single enclosure making the mechanical and electrical problems of providing these communication links much simpler. However, it is anticipated that the computing system of the preferred embodiment is so large in size that it is impractical to place all three of these elements within the same enclosure. If the size of the data processing apparatus is such that it cannot all be placed within one enclosure, then it is necessary to employ multiple enclosures and to interconnect the apparatus between these enclosures. As illustrated in Figure 1, there is a natural division of function among the central processing unit, the graphics controller and the user input/output terminal. Thus these units could be placed in three separate enclosures or they could be disposed in two enclosures in two differing manner . In the first of these the central processing unit and the graphics controller are in one enclosure and the user terminal is in the other as illustrated in Figure 1. In the other way the central processing unit is in a single unit and the graphics controller and the user terminal share one enclosure. Because the data processing apparatus of the preferred embodiment of the present invention employs a high resolution video display, the communication between central processing unit 110 and graphics controller 120 is necessarily of a high data rate. Therefore it is considered advantageous to enclose both central processing unit 110 and graphics controller 120 in the same enclosure.

In accordance with the preferred embodiment, central processing unit 140 and graphics controller 120 are placced within the same enclosure 140. Therefore, communication links 122 and 126 must pass from enclosure 140 to user terminal 130. In this event, both communication links 122 and 126 encounter the mechanical and electrical problems noted above.

Figure 2 illustrates the configuration of the transmitters and receivers on communication links 122 and 126 in accordance with the preferred embodiment of the present invention. Transmitter 210 and receiver 220 are located within graphics controller 120. Receiver 230 and transmitter 240 are located within user terminal 130.

Transmitter 210 transmits data on communication link 122 to receiver 230. Transmitter 210 receives video input 211, keyboard input 212 (which may control keyboard indicators or control the keyboard configuration) and sound input 213. Receiver 230 receives this data on communication link 112. Receiver 230 then separates out video data 231, keyboard data 232 and sound data 233 for application to those portions within user terminal 130 which employ this data (not illustrated). These features are conventional in nature. Receiver 230 also outputs clock signal 235 which is derived from signals received on communication link 122.

In accordance with the preferred embodiment of the present invention, both communications links 122 and 126 are formed of optical fibers. The use of optical fibers for the communications links minimizes the mechanical and electrical problems with such communications links. Firstly, fiber optic cables are very small and consequently such cables have a relatively small weight and bulk. These cables are also flexible in comparison to the prior art copper coaxial cables. Thus fiber optic cables contribute to the solution to the mechanical problems associated with such communications links.

In addition, fiber optic cables contribute to the solution to the electrical problems with such communications link . There are no oscillatory electrical currents in fiber optic cables. This lack of oscillatory electrical currents, which is in contrast to the prior art copper coaxial cables, is the factor which makes fiber optic cables advantageous. The major causes of electromagnetic interference (EMI) and radio frequency interference (RFI) are those oscillatory electrical currents. Thus fiber optic cables substantially reduce this source of electrical problems. In addition, fiber optic cables are nonconducting. For this reason there is also a substantially reduced chance of damaging electrostatic discharge (ESD) from fiber optic cables as opposed to the prior art copper coaxial cables. Note that such a fiber optic link prevents an electrostatic discharge path between the user terminal, where static is most likely to be generated, and the central processing unit, where it is most damaging.

Receiver 220 within graphics controller 120 receives data on communications link 126 from transmitter 240 located in user terminal 130. Transmitter 240 has applied to it keyboard data 241, mouse data 242 and speech data 243. Transmitter 240 also receives clock 235 from receiver 230. Transmitter 240 takes the incoming data together with the clock signal and generates a transmission on communications link 126 in the form required by communications link 126. This is then applied to receiver 220 within graphics controller 120. Receiver 220 converts the signal from communications link 126 into its component signals, namely keyboard data 221, mouse data 222 and speech data 223. This data is then applied to central processing unit 110 for processing by that element.

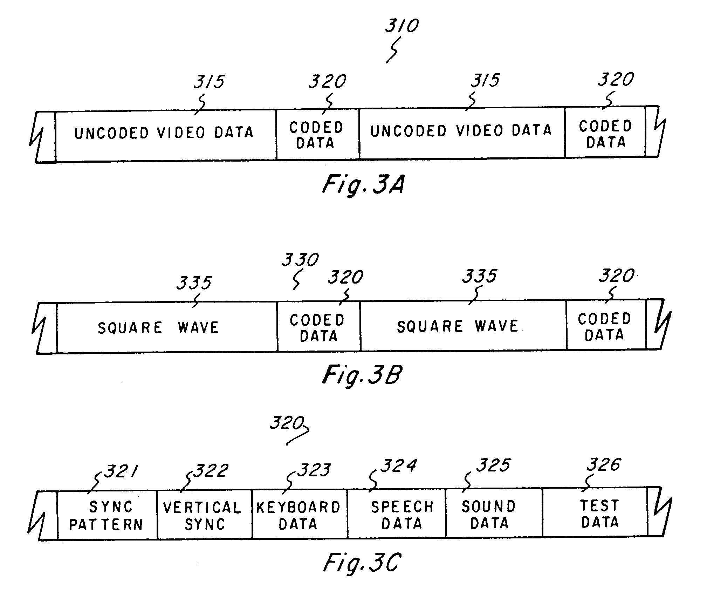

Figures 3(A) to 3(C) illustrate the format of the preferred embodiment of the communications from graphics controller 120 to user terminal 130 on communications link 122. Figure 3(A) illustrates the form of data transmitted on communications link 122 during normal horizontal scan periods. In the preferred embodiment the video signals are transmitted in digital form. For a monochromatic display each pixel of the display can be represented by a single bit. This digital video data is transmitted in a set of horizontal scan lines in accordance with the prior technicques concerning analog video signals. Figure 3(B) illustrates the form of communications transmitted during vertical retrace intervals. Lastly, Figure 3(C) illustrates the form of the coded data 320 transmitted during the horizontal retrace intervals.

Signal 310 illustrates the parts of the data transmitted on communications link 122 during normal horizontal trace intervals. This signal 310 is composed of uncoded video data 315 and coded data 320. The uncoded data 315 is preferably a single bit for each pixel for each horizontal line on the video display. Thus, for example, a zero in a particular bit position would cause the corresponding pixel on that line within the video display to be black. On the other hand, a one in that bit position would cause the corresponding pixel on the video screen to be white. This is according to the preferred embodiment employing digital video signals. Communications link 122 could carry analog signals to enable a gray scale. The required bit rate for the communications link is for the most part set by the number of pixels on the video screen and therefore the number of bit positions within uncoded video data 315. For example, for a high quality video screen having 1,000 lines of 1,000 pixels each, each uncoded video data portion 315 must have 1,000 bits and it requires transmission of 1,000 uncoded video data portions 315 in order to transmit the entire video screen. Therefore, each video screen includes approximately one million bits. In order to achieve a flicker free display in the presence of moving attributes, it is ordinarily considered necessary to transmit 60 complete frames per second. Thus, the data rate for such a high quality video screen is at least 60 million bits per second.

Coded data 320 of signal 310 contains the keyboard and sound portions together with other auxilliary data. This coded data 320 is further illustrated in Figure 3(C).

Signal 330 illustrates the signal on communications link 122 during the vertical retrace interval. As is well known in the art, during the vertical retrace interval of a raster scanned picture the cathode ray spot is returned to the upper right hand corner. During this time interval, which may equal the time interval of several horizontal scans, the incoming video data is ignored. Therefore, the video data transmitted during this portion of a scan cycle is unimportant. In the preferred embodiment, a square wave signal 335 is transmitted during this vertical retrace interval. In addition, coded data 320 is transmitted at the end of each of the horizontal scan lines which make up the vertical retrace interval, in the same manner as in the normal horizontal scan signal 310.

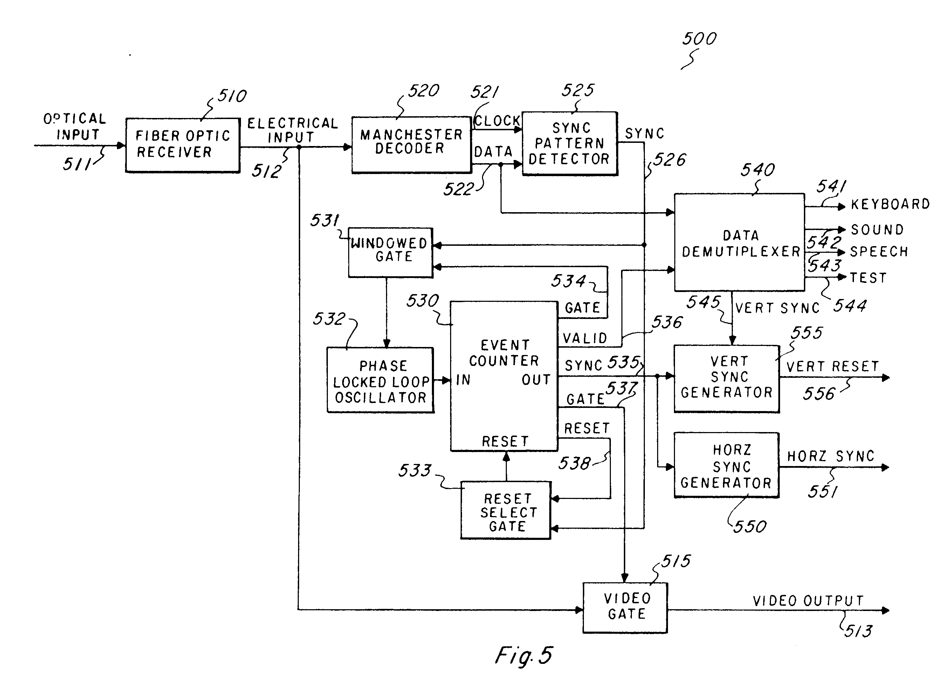

Coded data 320 is illustrated in detail in Figure 3(C). The coded data 320 includes sync pattern 321, vertical sync 322, keyboard data 323, speech data 324, sound data 325 and test data 326. Sync pattern 321 is employed to signal to the user terminal the end of a horizontal scan line. In an analog video system the horizontal sync signal is communicated via an analog signal outside the range of permissible video signals. In the video system of the preferred embodiment, the video data is transmitted as a digital signal. Therefore, it is necessary to provide another means for identifying the end of a horizontal scan line. The sync pattern 321 is a predetermined set of bits. As will be more fully explained below in conjunction with Figure 5, the receiving apparatus in the user terminal detects this predetermined set of bits corresponding to sync pattern 321 as will be further explained below, this also initializes the decoding of coded data 320.

Vertical sync 322 serves a function similar to sync pattern 321. Vertical sync 322 is employed to indicate when a frame reset is required.

The remaining portions of coded data 320 corresponds to data transmitted from the graphics controller 120 to user terminal 130. Keyboard data 323 serves to control any keyboard indicators and to control the configuration of the keyboard. Speech data 324 is employed in conjunction with a speech synthesis circuit. Speech data 324 specifies the particular synthetic speech to be produced at user terminal 130. Similarly, sound data 325 is employed in conjunction with an audible sound generator. Sound data 325 is employed within user terminal 130 to indicate the type of sounds to be produced by this sound generator. Lastly, test data 326 is employed by user terminal 130 in order to test various aspects of this unit under the control of the central processing unit 110.

It would be understood by those skilled in the art that the foregoing description of coded data 320 is not exhaustive. It would be clear to those skilled in the art that other forms of coded data may be transmitted via coded data 320 than those illustrated in Figure 3 and noted above. In particular, it should be noted that ordinarily the data rate required for the data within coded data portion 320 is much less than the data required for uncoded video data 315. Therefore, coded data 320 may be transmitted at a much lower bit rate. This much lower bit rate would require much less sophisticated decoding than would be required if it were transmitted at the rate of the uncoded video data.

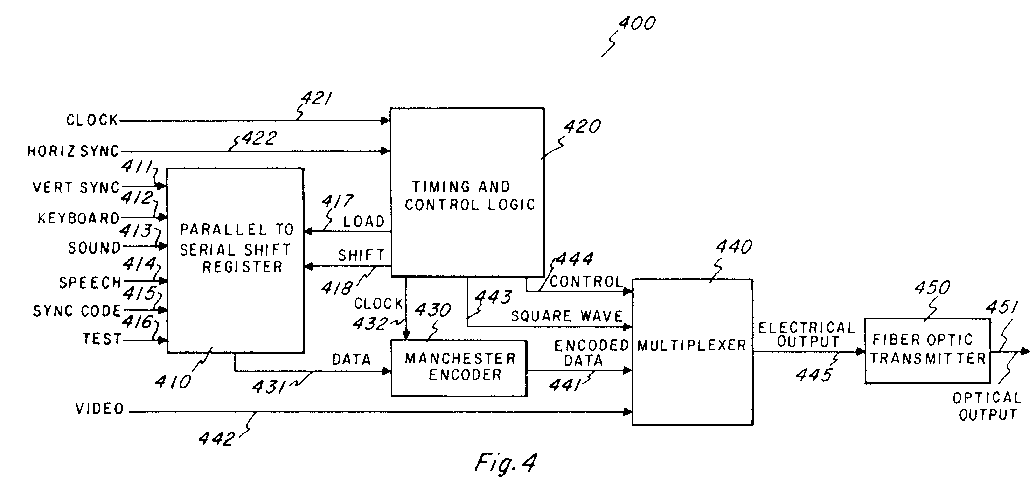

Figure 4 illustrates transmitter 400 located within the graphics controller. Transmitter 400 generates an optic output on communications link 122 which is then applied to the receiver in user terminal 130. Transmitter 400 includes parallel to serial shift register 410. Parallel to serial shift register 410 has numerous data and control inputs supplied thereto. The data inputs include vertical sync 411, keyboard data 412, sound data 413, speech data 414, sync code 415 and the test data 416. Although each of these data inputs is illustrated as including a single line, it should be understood that each of these signals may include a plurality of bits applied to parallel to serial shift register 410. Parallel to serial shift register 410 is controlled by load signal 417 and shift signal 418 from timing and control logic 420. The output from parallel to serial shift register 410 is serial data 431.

Timing and control logic 420 performs the major control functions within transmitter 400. Timing and control logic 420 receives a clock input 421 and a horizontal synchronization input 422. Timing and control logic 420 then produces various signals at the time required by the other elements of transmitter 400. Timing and control logic 420 produces load signal 417 and shift signal 418 to parallel to serial shift register 410. Load signal 417 is applied to shift register 410 when shift register 410 is being loaded with the various data bits. Shift signal 418 causes shift register 410 to no longer receive inputs but to shift its contents out as serial data 451 to Manchester encoder 430.

Manchester encoder 430 receives the serial data 431 from shift register 410 and further receives clock 452 from timing and control logic 420. Clock 432 may have a different frequency than clock 421 applied to timing and control logic 420. Manchester encoder 430 takes an exclusive OR of serial data 431 and clock signal 432 thereby producing encoded data 431. This encoded data 441 is applied to multiplexer 440.

Multiplexer 440 serves to combine various signals under the control of timing and control logic 420. Multiplexer 440 receives the encoded data 441 from Manchester encoder 430. Multiplexer 440 also receives uncoded video 442. Multiplexer 440 receives square wave 443 and control 444 from timing and control logic 420. Multiplexer 440 operates in accordance with control 444 to apply one of encoded data 441, video data 442 or square wave 443 to electrical output 445. During a normal horizontal scan period, video data 443 is coupled to electrical output 445. During a horizontal retrace interval, encoded data 441 is applied to electrical output 445. During the horizontal retrace interval of the set of scan lines corresponding vertical retrace, square wave 443 is coupled by multiplexer 440 to electrical output 445 in place of video data 443. Thus, multiplexer 440 serves to assemble and combine the signals illustrated in Figure 3. Timing and control logic 440 places the proper signals on control 444 enabling multiplexer 440 to perform this function.

Fiber optic transmitter 450 converts an electrical signal into an optical signal. In accordance with the preferred embodiment of the present invention, the communications link 122 between graphic controller 120 and user terminal 130 is via an optic fiber. Fiber optic transmitter 450 receives electrical output 445 from multiplexer 440. Fiber optic transmitter 440 then converts this to optical output 451. This optical output 451 is applied to an optic fiber (not shown) which forms communications link 122.

Figure 5 illustrates receiver 500. Receiver 500 is located in user terminal 130 and receives an input on communication link 122. This appears as optical input 511 to fiber optic receiver 510. As explained in further detail below, receiver 500 generates outputs for use by the utilization portions of the user terminal.

Fiber optic receiver 510 serves as the input to receiver 500. Fiber optic receiver 510 receives an optical input 511 from communications link 112. Fiber optic receiver 510 then converts this optical input into an electrical input 512 which is applied to both video gate 515 and Manchester decoder 520. is previously described in conjunction with Figure 3, optical input 511 includes portions corresponding to uncoded video data 315 on square wave signal 335 and portions corresponding to coded data 320. Video gate 515 and Manchester decoder 520 are employed to separate these respective components.

Electrical input 512 is applied to Manchester decoder 520. Manchester decoder 520 is constructed in order to recover the clock signal from Manchester encoded data. Once this clock signal has been recovered, then it is possible to separate this encoded data from the encoded video data. Manchester decoder 520 then produces clock signal 521 and data signal 522.

Clock signal 521 and data signal 522 are applied to sync pattern detector 525. Sync pattern detector 525 checks to determine whether the sync pattern 321 has been received. When sync pattern 321 has been received, a sync signal 526 is generated. The reception of sync pattern 321 is most important as it marks the end of the uncoded video data 315 or square wave signal 335 and the beginning of coded data 320. This is clearly an important time, and sync signal 526 signals the detected reception of sync pattern 321.

Major timing and control functions in receiver 500 are carried out by event counter 530. Event counter 530 works in conjunction with windowed gate 531, phase locked loop oscillator 532 and reset select gate 533 in order to provide proper timing and control signals for the output portions of receiver 500. Then event counter 530 counts pulses received from phase locked loop oscillator 532. Dependent upon this count, event counter then generates signals at its output such as gate signal 534, sync signal 535, valid signal 536, gate signal 537 and reset signal 538.

Phase lock loop oscillator 532 generates timing pulses used by event counter 530 to control the various events in receiver 500. Phase locked loop oscillator 532 is in turn controlled by windowed gate 531. Windowed gate 531 receives sync signal 536 from sync pattern detector 525 and a gate signal 534 from event counter 530. Windowed gate 531 applies a rate signal to phase locked loop oscillator 532 in order to control its frequency and thereby the timing of event counter 530. This rate signal is dependent upon the rate at which sync signal 526 is received from sync pattern detector 525. Gate signal 534 is employed in order to prevent false rate signals caused by false detection of a signal pattern. Event counter 530 produces gate signal 534 in order to enable windowed gate 531 only during a predetermined interval near the expected time of arrival of sync pattern 321 and hence sync signal 526. Preferably, gate signal 534 is of a variable duration depending upon the quality of the phase lock on the sync pattern 321. That is, window gate 531 would be enabled for longer periods under the control of gate signal 534 when a good phase lock has not been achieved. On the other hand, windowed gate 534 would only be enabled for a short period of time once the quality of the phase lock has improved. Thus, the timing of events from event counter 530 is in phase with the reception of sync pattern 321 from communication link 122.

The count within event counter 530 is reset by reset select gate 533. Reset select gate 533 resets event counter 530 based upon two contingencies. In the normal case, reset signal 538 from event counter 530 occurs nearly simultaneously with sync signal 526. In this event, reset select gate 533 resets event counter upon reception of reset signal 538. This prevents any slight jitter in reception and detection of sync pattern 321 from interferring with normal operation. If reset signal 538 and sync signal 526 drift apart in time further than a preset limit, and if this condition lasts for several cycles, then reset select gate 533 switches to operation upon reception of sync signal 526. This continues until reset signal 538 and sync signal 526 are again received within the preset limit apart, whereupon normal operation resumes. This prevents false triggering to continue in the event that reset signal 538 drifts away from sync signal 526.

Once event counter 530 has been properly set and in synchronization with the reception of sync pattern 321, event counter 530 properly controls the output portion of receiver 500. Event counter 530 produces a gate signal 537 which is applied to video gate 515. This permits video gate 515 to pass the electrial input 512 to video output 513. This gate signal 537 is applied during the period of reception of uncoded video data 315. The time at which video gate 515 is opened is timed in conjunction with the internal count of event counter 530 in order to correspond to the interval of reception of uncoded video data 315. Thus, video output 513 includes successive scan lines of uncoded video data 315 with coded data 320 removed. During vertical retrace intervals, video gate 515 is turned off so that neither square wave signal 335 nor encoded data 320 appears at video output 513.

Data multiplexer 540 receives data signal 522 from Manchester decoder 520 and a valid data signal 536 from event counter 530. The data signal 522 from Manchester decoder 520 is a serial bit stream which is loaded into data de-multiplexer 540 during a loading phase. Upon reception of a valid data signal from event counter 530, data multiplexer 540 generates parallel outputs to various portions of user terminal 130. These outputs include keyboard output 541, sound output 542, speech output 543 and test output 544. These multibit data signals are utilized by various portions of user terminal 130 in a conventional manner. When valid data signal 536 is not received from event counter 530, then data demultiplexer 540 does not generate these various output signals.

Horizontal sync generator 550 and vertical sync generator 555 generate synchronization signals to the video portion of user terminal 130 in order to control the horizontal and vertical scanning motion. Both horizontal sync generator 550 and vertical sync generator 555 receive sync signal 535 from event counter 530. This sync signal 535 is received from event counter 530 other than directly from sync pattern detector 525 in order to reduce the instances of false sync detection. Event counter 530 with windowed gate 531 and phase locked loop oscillator 532 provides a more reliable indication of the reception of sync pattern 321 with fewer false indications than that received directly from sync pattern detector 525. Horizontal sync generator 550 generates horizontal sync signal 551 directly from sync signal 535. On the other hand, vertical sync generator 555 receives an additional input. This additional input is vertical sync signal 545. Note that vertical sync signal 322 is a part of coded data 320. In order to detect a valid vertical sync signal, causing a frame reset in the video display of user terminal 130, it is necessary to receive both sync pattern 321 and vertical sync 322. Vertical sync 322 is a portion of coded data 320 and thug data signal 522 applied to data demultiplexer 540. From the occurrence of both sync signal 535 and vertical sync signal 545, vertical sync generator 535 generates vertical reset signal 536. This is employed in the video display terminal in order to reset the video frame.

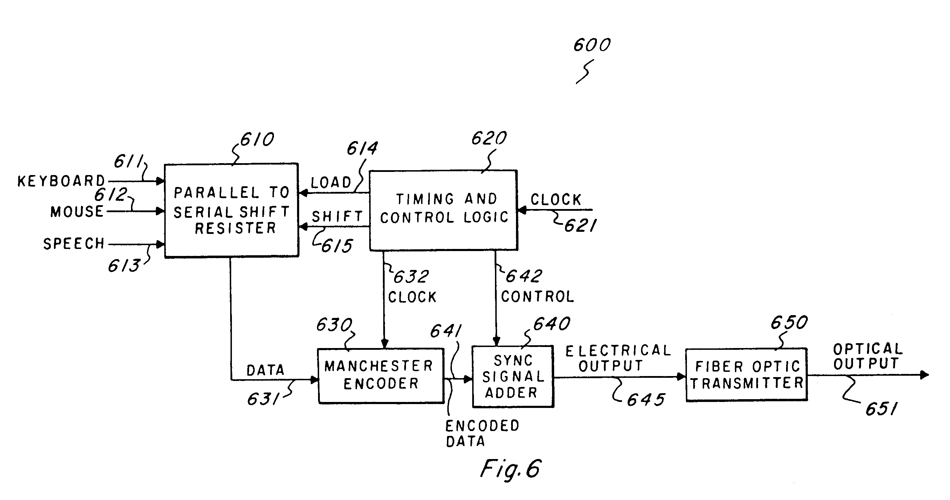

Figure 6 illustrates transmitter 600 which is located in user terminal 130. Transmitter 600 transmits keyboard, mouse and speech data from user terminal 130 to graphics controller 120 via communications link 126.

Input data to transmitter 600 is applied to parallal to serial shift register 610. This includes keyboard data 611, mouse data 612 and speech data 613. As explained above in conjunction with Figure 4, each of these data inputs preferably includes a plurality of parallel bits. This data is loaded into parallel to serial shift register 610 in accordance with load command 614 from timing and control logic 620. Upon reception of shift signal 615, parallel to serial shift register 610 applies serial data 631 to manchester encoder 630.

Timing and control logic 620 performs the major timing and control functions of transmitter 600. Timing and control logic 620 receives clock signal 621 from receiver 500. This clock signal 621 is related to clock signal 521 produced by Manchester decoder 520. By this means, transmitter 600 is tied to the same Manchester clock signal as transmitter 400 in graphics controller 120.

Timing and control logic 620 produces load signal 614 and shift signal 615 in the proper time to enable parallel to serial conversion of the input data by parallel to serial shift register 610. Timing and control logic 620 also produces clock signal 632 to be applied to Manchester encoder 630. Manchester encoder 630 operates to combine OR data 631 and clock 632 to produce encoded data 641.

Timing and control logic further generates control signal 642 which is applied to sync signal adder 640. Sync signal adder 640 receives encoded data 641 from manchester decoder 630 and add a sync signal similar to sync pattern 321 of coded data 320 to the encoded data 641. The time at which this sync signal is applied is controlled by control signal 642. Sync signal adder 640 thus produces electrical output 645.

Fiber optic transmitter 650 receives electrical output 645. Fiber optic transmitter 650 produces optical output 651 corresponding to electrical output 645. This optical output 651 is applied to an optic fiber (not shown) forming communications link 126. Thus, the keyboard, mouse and speech data is applied to communications link 126.

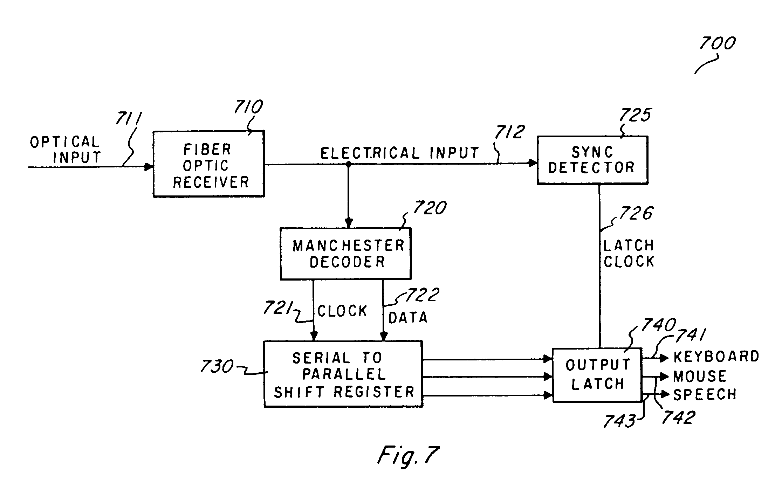

Figure 7 illustrates receiver 700 located in graphics controller 120. Receiver 700 is connected to communications link 126 and receives the signals transmitted by transmitter 600.

Receiver 700 includes fiber optic receiver 710 which receives optical input 711. This is from the optic fiber which forms communications link 126. In accordance with the received optical input 711, fiber optic receiver 710 generates electrical input 712.

The electrical input 712 is applied to Manchester decoder 720. In a manner similar to that described above in conjunction with Manchester decoder 520, Manchester decoder 720 generates clock 721 corresponding to the clock 632 employed in Manchester encoder 630 and data 722. This data 722 corresponds to the original data received by transmitter 600.

Clock 721 and data 722 are applied to serial to parallel shift register 730. The parallel outputs from serial to parallel shift register 730 are applied to output latch 740. Output latch 740 also receives a latch clock signal 726 from sync detector 725. Sync detector 725 receives electrical input 712 and generates the latch clock signals 726 upon detection of the appropriate sync signal. This sync signal is the sync signal applied to the encoded data by sync signal adder 640. Sync detector 725 indicates this detection via latch clock 726. At this time the data loaded within output latch 740 is valid. Therefore, output latch 740 generates keyboard data 741, mouse data 742 and speech data 743 corresponding to the data input to transmitter 600. This data is employed in graphics controller 120 and central processing unit 110. These signals from user terminal 130 are employed then to control the operation of the data processing apparatus.

## Claims

1. A video communications interface comprising
a communications link (122) for transmitting communications signals,
a video generator for generating a video signal (442) having a plurality of scan lines,
a data encoder (410,420,430) for generating a digital data signal,
a multiplexing means (440) connected to said video generator and said data encoder for time division multiplexing said video signal and said digital data signal to form a multiplexed signal (445), and
a transmitting means (450) connected to said communications link and said multiplexing means for generating communications signals (451) on said communications link corresponding to said multiplexed signal, and
a video display device (130) including
a receiving means (510) connected to said communications link for receiving the communications signals and for producing therefrom a corresponding received multiplexed signal (512),
a demultiplexing means (515,520,525,530,531,532, 533,540) connected to the receiving means for deriving and providing both a received video signal (513) and a received digital data signal (535,541,542,543,544,545) from the received multiplexed signal,
a video display means for generating a visually perceivable display corresponding to the received video signal, and
a utilization device for receiving and using said received digital data signal,
the video communications interface being characterised in that
the video signal is a digital video signal,
the digital data signal is generated during the retrace intervals between the video scan lines of the video signal,
which generated digital signal has self-clocking control data and has a lower data rate than said digital video signal; and
the demultiplexing means also includes a self-clocking detection means (520) for detecting said self-clocking of the digital data signal present within the received multiplexed signal, thereby enabling detection of said data, and
a timed gating means (525,530,531,532,533) connected to said self-clocking detecting means for enabling said self-clocking detection means to provide output signals only during time intervals during which the retrace interval is expected.

2. A video display device communications interface according to claim 1, wherein
said data encoder includes means for generating a predetermined sync bit pattern indicating the end of a video scan line of said digital video signal; and
said utilization device includes a sync bit pattern detection means (525) for detecting the reception of said predetermined sync bit pattern and a horizontal reset means (550) for beginning display of a new video line upon detection of said sync bit pattern.

3. A video display device communications interface according to claim 1 or claim 2, wherein
said data encoder includes means for generating a predetermined vertical sync bit pattern indicating the end of a video frame of said digital video signal; and
said utilization device includes a vertical sync bit pattern detection means (540) for detecting the reception of said predetermined vertical sync bit pattern and a vertical reset means (555) for beginning display of a new video frame upon detection of said vertical sync hit pattern.

4. A video display device communications interface according to any one of claims 1, 2 or 3, wherein
said digital data signal includes sound generation data (413); and
said utilization device comprises a sound generation means for generating sound corresponding to said sound generation data.

5. A video display device communications interface according to any one of claims 1 to 4, wherein
said digital data signal includes synthetic speech generation data (414); and
said utilization device comprises a synthetic speech generating means for generating synthetic speech corresponding to said synthetic speech generation data.

6. A video display device communications interface according to any one of claims 1 to 5, wherein
said communications link (122) includes a fiber optic cable;
said transmitting means (450) includes an optic fiber transmitter means connected to said fiber optic cable for generating digital light signals corresponding to multiplexed signal;
said receiving means includes an optic fiber receiver connected to said fiber optic cable for generating a demodulated signal (512) corresponding to said digital light signals (511) transmitted by said fiber optic cable.

7. A video communications interface according to any one of claims 1 to 5, wherein
said communications link (122) includes a fiber optic cable having a first optic fiber and a second optic fiber;
said transmitting means (450) includes an optic fiber transmitter means connected to said first optic fiber for generating digital light signals corresponding to said multiplexed signal (445);
said video display generating means further includes:
a first optic fiber receiver (710) connected to said second optic fiber for generating an output signal (712) corresponding to light transmitted by said second optic fiber; and
an output means (720,725,730,740) connected to said first optic fiber receiver for utilizing said output signal;
said receiving means includes a second optic fiber receiver (510) connected to said first optic fiber for generating a demodulated signal (512) corresponding to said digital light signals transmitted by said optic fiber; and
said video display device further includes:
an input means (610,620,630,640) for receiving operator inputs and generating input signals (645) corresponding to said operator inputs; and
a second fiber optic transmitted (650) connected to said input means and said second optic fiber for generating digital light signals on said second optic fiber (651) corresponding to said input signals.

8. A video communications device according claim 7, wherein
said input means includes a manually actuatable keyboard.

9. A video communications device according claim 7 or claim 8, wherein
said input means includes a manually actuatable pointing device,

10. A video communications device according any one of claims 7 to 9, wherein
said input means includes a vocally actuatable speech encoding device.

## Patentansprüche

1. Videoübertragungsschnittstelle mit einer
Übertragungsverbindung (122) zum Übermitteln von Übertragungssignalen,
einem Videogenerator zur Erzeugung eines Videosignals (442) mit einer Mehrzahl von Abtastzeilen,
einem Datencodierer (410, 420, 430) zur Erzeugung eines digitalen Datensignals,
einer Multiplexeinrichtung (440), die mit dem Videogenerator und dem Datencodierer für ein Zeitmultiplexen des Videosignals und des digitalen Datensignals verbunden ist, um ein Multiplexsignal (445) zu bilden,
einer Sendeeinrichtung (450), die an die Übertragungsverbindung und die Multiplexeinrichtung angeschlossen ist, um auf der Übertragungsverbindung Übertragungssignale (451) entsprechend dem Multiplexsignal zu erzeugen,
einer Videosichtanzeige (130) mit einer Empfangseinrichtung (510), die an die Übertragungsverbindung angeschlossen ist, um die Übertragungssignale zu empfangen und davon ein entsprechendes Empfangs-Multiplexsignal (512) zu erzeugen,
einer Demultiplexeinrichtung (515, 520, 525, 530, 531, 532, 533, 540), die mit der Empfangseinrichtung verbunden ist, um sowohl ein Empfangs-Videosignal (513) als auch ein digitales Empfangs-Datensignal (535, 541, 542, 543, 544, 545) von dem empfangenen Multiplexsignal zu erhalten und zu erzeugen,
einer Videosichtanzeige-Einrichtung zur Erzeugung einer sichtbaren Anzeige entsprechend dem Empfangs-Videosignal, und
einer Verwertungseinrichtung für den Empfang und die Verwertung des digitalen Empfangs-Datensignals,
wobei die Videoübertragungsschnittstelle dadurch gekennzeichnet ist,
daß das Videosignal ein digitales Videosignal ist,
daß das digitale Datensignal während der Rücklaufintervalle zwischen den Videoabtastzeilen des Videosignals erzeugt wird,
daß das erzeugte digitale Signal selbsttaktende Steuerdaten aufweist und eine geringere Datenrate als das digitale Videosignal besitzt,
daß die Demultiplexeinrichtung auch eine Selbsttaktende Erfassungseinrichtung (520) enthält, um die Selbsttaktung des digitalen Datensignals zu erfassen, das in dem empfangenen Multiplexsignal vorliegt, um dadurch eine Erfassung der Daten zu ermöglichen, und
daß zeitgesteuerte Gattermittel (525, 530, 531, 532, 533) mit der selbsttaktenden Erfassungseinrichtung verbunden sind, um die selbsttaktende Erfassungseinrichtung in die Lage zu versetzen, Ausgangssignale nur während Zeitintervallen zu erzeugen, in denen das Rücklaufintervall erwartet wird.

2. Videosichtanzeige-Übertragungsschnittstelle nach Anspruch 1, bei der
der Datencodierer Mittel zur Erzeugung eines vorbestimmten Synchronisierbitmusters enthält, das das Ende einer Videoabtastzeile des digitalen Videosignals angibt, und
die Verwertungseinrichtung ein Synchronisierbitmuster-Erfassungsmittel (525) enthält, um den Empfang des vorbestimmten Synchronisierbitmusters zu erfassen, und ein horizontales Rücksetzmittel (550) aufweist, um mit der Anzeige einer neuen Videozeile auf eine Erfassung des Synchronisierbitmusters hin zu beginnen.

3. Videosichtanzeige-Übertragungsschnittstelle nach Anspruch 1 oder 2, bei der
der Datencodierer Mittel zur Erzeugung eines vorbestimmten vertikalen Synchronisierbitmusters enthält, das das Ende eines Videobildes des digitalen Videosignals angibt, und
die Verwertungseinrichtung ein vertikales Synchronisierbitmuster-Erfassungsmittel (540) zur Erfassung des Empfangs des vorbestimmten vertikalen Synchronisierbitmusters sowie ein vertikales Rücksetzmittel (555) enthält, um mit der Anzeige eines neuen Videobildes auf eine Erfassung des vertikalen Synchronisierbitmusters hin zu beginnen.

4. Videosichtanzeige-Übertragungsschnittstelle nach einem der Ansprüche 1, 2, oder 3, bei der
das digitale Datensignal Tonerzeugungsdaten (413) enthält, und
die Verwertungseinrichtung ein Tonerzeugungsmittel aufweist, um den Ton entsprechend den Tonerzeugungsdaten zu erzeugen.

5. Videosichtanzeige-Übertragungsschnittstelle nach einem der Ansprüche 1 bis 4, bei der
das digitale Datensignal Daten (414) zur synthetischen Spracherzeugung enthält, und
die Verwertungseinrichtung ein Mittel zur synthetischen Spracherzeugung enthält, um eine synthetische Sprache entsprechend den Daten zur synthetischen Sprachererzeugung zu bilden.

6. Videosichtanzeige-Übertragungsschnittstelle nach einem der Ansprüche 1 bis 5, bei der
die Übertragungsverbindung (122) ein Lichtleitfaserkabel enthält,
die Sendeeinrichtung (450) ein Lichtleitfasersendemittel enthält, das mit dem Lichtleitfaserkabel verbunden ist, um digitale Lichtsignale entsprechend dem Multiplexsignal zu erzeugen,
die Empfangseinrichtung einen Lichtleitfaserempfänger enthält, der mit dem Lichtleitfaserkabel verbunden ist, um ein demoduliertes Signal (512) entsprechend den digitalen Lichtsignalen (512) zu erzeugen, die mittels des Lichtleitfaserkabels übertragen werden.

7. Videoübertragungsschnittstelle nach einem der Ansprüche 1 bis 5, bei der
die Übertragungsverbindung (122) ein Lichtleitfaserkabel mit einem ersten Lichtleiter und einem zweiten Lichtleiter enthält, und
die Sendeeinrichtung (450) ein Lichtleitersendemittel enthält, das mit dem ersten Lichtleiter verbunden ist, um digitale Lichtsignale entsprechend dem Multiplexsignal (445) zu erzeugen,
wobei die Mittel zur Erzeugung einer Videoanzeige überdies folgendes enthalten:
einen ersten Lichtleiterempfänger (710), der mit dem zweiten Lichtleiter verbunden ist, um ein Ausgangssignal (712) entsprechend einem Licht zu erzeugen, das mittels des zweiten Lichtleiters übertragen wird,
ein Ausgangsmittel (720, 725, 730, 740), das mit dem ersten Lichtleiterempfänger verbunden ist, um das Ausgangssignal zu verwerten,
wobei die Empfangseinrichtung einen zweiten Lichtleiterempfänger (510) enthält, der mit dem ersten Lichtleiter verbunden ist, um ein demoduliertes Signal (512) entsprechend den digitalen Lichtsignalen zu erzeugen, die mittels des Lichtleiters übertragen werden,
und wobei die Videosichtanzeige-Einrichtung überdies folgendes enthält:
ein Eingangsmittel (610, 620, 630, 640) für den Empfang von Bedienereingaben und zur Erzeugung von Eingangssignalen (645) entsprechend den Bedienereingaben, und
einen zweiten Lichtleitersender (650), der mit den Eingangsmitteln und dem zweiten Lichtleiter verbunden ist, um auf dem zweiten Lichtleiter (651) digitale Lichtsignale entsprechend den Eingangssignalen zu erzeugen.

8. Videoübertragungseinrichtung nach Anspruch 7, bei der
die Eingangsmittel eine manuell betätigbare Tastatur enthalten.

9. Videoübertragungseinrichtung nach Anspruch 7 oder 8, bei der
die Eingangsmittel eine manuell betätigbare Markierungseinrichtung enthalten.

10. Videoübertragungseinrichtung nach einem der Ansprüche 7 bis 9, bei der
die Eingangsmittel eine über die Stimme betätigbare Sprachcodiereinrichtung enthalten.

## Revendications

1. Interface de communications vidéographiques comprenant :
- une liaison de communication (122) pour transmettre des signaux de communications ;
- un générateur vidéographique pour produire un signal vidéographique (442) ayant une pluralité de lignes de balayage ;
- un codeur de données (410, 420, 430) pour produire un signal numérique de données ;
- des moyens de multiplexage (440) reliés audit générateur vidéographique et audit codeur de données pour multiplexer par division dans le temps ledit signal vidéographique et ledit signal numérique de données afin de former un signal multiplexé (445) ; et
- des moyens de transmission (450) reliés à ladite liaison de communications et auxdits moyens de multiplexage pour produire des signaux de communications (451) sur ladite liaison de communications correspondant audit signal multiplexé ; et
- un dispositif d'affichage vidéographique (130) comprenant :
- des moyens de réception (510) reliés à ladite liaison de communications pour recevoir les signaux de communications et pour produire à partir d'eux un signal multiplexé reçu correspondant (512) ;
- des moyens de démultiplexage (515, 520, 525, 530, 531, 532, 533, 540) reliés aux moyens de réception pour extraire du signal multiplexé reçu et fournir à la fois un signal reçu vidéographique (513) et un signal reçu numérique de données (535, 541, 542, 543, 544, 545) ;
- des moyens d'affichage vidéographique pour produire un affichage perceptible visuellement correspondant au signal vidéographique reçu ; et
- un dispositif d'utilisation pour recevoir et utiliser ledit signal numérique reçu de données ;
- l'interface de communications vidéographiques étant caractérisée en ce que :
- le signal vidéographique est un signal vidéographique numérique ;
- le signal numérique de données est produit pendant les intervalles de retour de balayage entre les lignes de balayage vidéographique du signal vidéographique ;
- ledit signal numérique produit a des données de commande autocadencées et a un débit de données inférieur à celui dudit signal vidéographique numérique ; et
- les moyens de démultiplexage comprennent aussi des moyens de détection autocadencés (520) pour détecter ledit auto-cadencement du signal numérique de données présent dans le signal multiplexé reçu, permettant ainsi la détection desdites données ; et
- des moyens de déclenchement temporisé (525, 530, 531, 532, 533) reliés auxdits moyens de détection auto-cadencés pour permettre auxdits moyens de détection auto-cadencés de fournir des signaux de sortie seulement pendant les intervalles de temps pendant lesquels est prévu l'intervalle de retour de balayage.

2. Interface de communications pour dispositif d'affichage vidéographique selon la revendication 1, dans laquelle :
- ledit codeur de données comprend des moyens pour produire une configuration binaire prédéterminée de synchronisation indiquant la fin d'une ligne de balayage vidéographique dudit signal vidéographique numérique ; et
- ledit dispositif d'utilisation comprend des moyens de détection de configuration binaire de synchronisation (525) pour détecter la réception de ladite configuration binaire prédéterminée de synchronisation et des moyens de réinitialisation horizontale (550) pour commencer l'affichage d'une nouvelle ligne vidéographique après détection de ladite configuration binaire de synchronisation.

3. Interface de communications pour dispositif d'affichage vidéographique selon la revendication 1 ou 2, dans laquelle :
- ledit codeur de données comprend des moyens pour produire une configuration binaire prédéterminée de synchronisation verticale indiquant la fin d'une image vidéographique dudit signal vidéographique numérique ; et
- ledit dispositif d'utilisation comprend des moyens de détection de configuration binaire de synchronisation verticale (540) pour détecter la réception de ladite configuration binaire prédéterminée de synchronisation verticale et des moyens de réinitialisation verticale (555) pour commencer l'affichage d'une nouvelle image vidéographique après détection de ladite configuration binaire de synchronisation verticale.

4. Interface de communications pour dispositif d'affichage vidéographique selon l'une quelconque des revendications 1, 2 ou 3, dans laquelle :
- ledit signal numérique de données comprend des données de production de son (413) ; et
- ledit dispositif d'utilisation comprend des moyens de production de son pour produire un son correspondant auxdites données de production de son.

5. Interface de communications pour dispositif d'affichage vidéographique selon l'une quelconque des revendications 1 à 4, dans laquelle :
- ledit signal numérique de données comprend des données pour production de parole synthétisée (414) ; et
- ledit dispositif d'utilisation comprend des moyens de production de parole synthétisée pour produire une parole synthétisée correspondant auxdites données pour production de parole synthétisée.

6. Interface de communications pour dispositif d'affichage vidéographique selon l'une quelconque des revendications 1 à 5, dans laquelle :
- ladite liaison de communications (122) comprend un câble à fibre optique ;
- lesdits moyens de transmission (450) comprennent des moyens de transmission par fibre optique reliés audit câble à fibre optique pour produire des signaux numériques lumineux (511) correspondant au signal multiplexé ;
- lesdits moyens de réception comprennent un récepteur pour fibre optique relié audit câble à fibre optique pour produire un signal démodulé (512) correspondant auxdits signaux numériques lumineux (511) transmis par ledit câble à fibre optique.

7. Interface de communications pour dispositif d'affichage vidéographique selon l'une quelconque des revendications 1 à 5, dans laquelle :
- ladite liaison de communications (122) comprend un câble à fibre optique ayant une première fibre optique et une deuxième fibre optique ;
- lesdits moyens de transmission (450) comprennent des moyens de transmission par fibre optique reliés à ladite première fibre optique pour produire des signaux numériques lumineux correspondant audit signal multiplexé (445) ;
- lesdits moyens de production d'affichage vidéographique comprennent en outre :
- un premier récepteur pour fibre optique (710) relié à ladite deuxième fibre optique pour produire un signal de sortie (712) correspondant à la lumière transmise par ladite deuxième fibre optique ; et
- des moyens de sortie (720, 725, 730, 740) reliés à ladite première fibre optique pour utiliser ledit signal de sortie ;
- lesdits moyens de réception comprennent un deuxième récepteur pour fibre optique (510) relié à ladite première fibre optique pour produire un signal démodulé (512) correspondant auxdits signaux numériques lumineux transmis par ladite fibre optique ; et
- ledit dispositif d'affichage vidéographique comprend en outre :
- des moyens d'entrée (610, 620, 630, 640) pour recevoir des données introduites par un opérateur et produire des signaux d'entrée (645) correspondant auxdites données introduites par un opérateur ; et
- un deuxième dispositif de transmission par fibre optique (650) relié auxdits moyens d'entrée et à ladite deuxième fibre optique pour produire sur ladite deuxième fibre optique (651) des signaux numériques lumineux correspondant auxdits signaux d'entrée.

8. Dispositif de communications vidéographiques selon la revendication 7, dans lequel :
- lesdits moyens d'entrée comprennent un clavier pouvant être actionné manuellement.

9. Dispositif de communications vidéographiques selon la revendication 7 ou 8, dans lequel :
- lesdits moyens d'entrée comprennent un dispositif de pointage pouvant être actionné manuellement.

10. Dispositif de communications vidéographique selon l'une quelconque des revendications 7 à 9, dans lequel :
- lesdits moyens d'entrée comprennent un dispositif de codage de parole pouvant être activé par la parole.
